# EUROPEAN PATENT APPLICATION

(11) **EP 4 564 562 A1**
(43) Date of publication of application: **04.06.2025**
(21) Application number: 23894988.7
(22) Date of filing: 21.11.2023
(51) Int. Cl.: H01M 50/30, H01M 50/383, H01M 50/358, H01M 50/204

(54) **BATTERY PACK AND DEVICE COMPRISING SAME**

(30) Priority: 22.11.2022 KR 20220157566; 20.11.2023 KR 20230160495
(71) Applicant: LG Energy Solution, Ltd., Seoul 07335 (KR)
(72) Inventor: KIM, Soo Han, Daejeon 34122 (KR); AHN, Moon Youl, Daejeon 34122 (KR); KONG, Seungjin, Daejeon 34122 (KR); SONG, Suk Jin, Daejeon 34122 (KR); KANG, Ye Ran, Daejeon 34122 (KR); KANG, Jae Hyuk, Daejeon 34122 (KR); LEE, Young Bin, Daejeon 34122 (KR)
(74) Representative: Plasseraud IP
(86) International application number: PCT/KR2023/018751
(87) International publication number: WO 2024/112060

(57) **Abstract**

A battery pack according to one embodiment of the present disclosure includes: pack frames on which a plurality of battery modules are mounted; at least one discharge part located on one side surface of the pack frames; a first filter part located between the pack frames and a battery module located closest to the discharge part among the plurality of battery modules; and a second filter part located at a position corresponding to the discharge part at one side surface of the pack frames, wherein materials generated in the battery module move through the first filter part, the second filter part, and the discharge part.

## Description

### [TECHNICAL FIELD]

### Cross Citation with Related Application(s)

This application claims priority benefit of Korean Patent Application No. 10-2022-0157566 filed on November 22, 2022 and Korean Patent Application No. 10-2023-0160495 filed on November 20, 2023 in the Korean Intellectual Property Office, the disclosures of which are incorporated herein by their reference in their entirety.

The present disclosure relates to a battery pack and a device including the same, and more particularly, to a battery pack that prevents structural collapse of the battery pack and also prevents external flame generation, and a device including the same.

### [BACKGROUND]

Secondary batteries, which are easily applicable to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate byproducts from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch-type secondary battery in which the electrode assembly is embedded in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

In particular, the battery pack is configured to have a structure in which a plurality of battery modules is combined. Therefore, in a case in which overvoltage, overcurrent, or overheating is applied to some of the battery modules, safety and operation efficiency of the battery pack are seriously concerned. In particular, the capacity of the battery pack tends to increase gradually in order to improve mileage, and as the energy inside the pack increases accordingly, it is necessary to design a structure that satisfies strengthened safety standards and secures the safety of the vehicle and driver.

In particular, in order to prevent in advance thermal runaway within the battery pack and heat propagation phenomena between battery cells, recently, as gases and flames generated in some battery cells are effectively discharged through a discharge device, there is a growing need to develop a battery pack that can minimize the damage.

In addition, if gas or flame occurs in some battery modules, some of the battery cells in the battery module may eject particles, which are materials inside the cells, under high pressure, and such particles can generate external flames when discharged outside the pack, while clogging the discharge device that discharges gas and flames within the battery pack. Thereby, there is a growing need to develop a battery pack that can prevent such particles from clogging a discharge device that discharges gas and flame, and also prevent generation of external flames due to particles.

### [DETAILED DESCRIPTION OF THE INVENTION]

### [Technical Problem]

It is an object of the present disclosure to provide a battery pack that not only prevents particles, which are materials inside the cells ejected when gas or flame is generated in some battery modules, from clogging the discharge device of the battery pack, but also prevents structural collapse caused by increasing the internal pressure of the battery pack, while minimizing the discharge of such particles to the outside of the battery pack to thereby prevent generation of external flames, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: pack frames on which a plurality of battery modules are mounted; at least one discharge part located on one side surface of the pack frames; a first filter part located between the pack frames and a battery module located closest to the discharge part among the plurality of battery modules; and a second filter part located at a position corresponding to the discharge part at one side surface of the pack frames, wherein materials generated in the battery module move through the first filter part, the second filter part, and the discharge part.

The area of the first filter part may be larger than the sum of the areas of the at least one discharge part.

The area of the first filter part may be larger than the sum of the areas of the second filter part.

The battery pack further comprises at least one electrical part located between the pack frame and a battery module located closest to the discharge part among the plurality of battery modules, wherein the first filter part extends along one side surface of the pack frame and may have a structure that avoids the at least one electrical part.

The first filter part may have a streamline or zigzag pattern.

The first filter part comprises at least one closing part spaced apart from each other, and the materials generated in the battery module may move while avoiding the closing part.

The pack frame comprises a lower pack frame on which a plurality of battery modules are mounted and an upper pack frame located on an upper part of the battery module, wherein the lower pack frame may comprise a bottom part in contact with the lower surface of the battery module and a frame part in contact with at least one side surface of the battery module.

The frame part may comprise a side surface frame extending from the edge of the bottom part toward the upper part and an internal frame located inside the side surface frame.

The plurality of battery modules may be partitioned from each other by the side surface frame and the internal frame.

The internal frame may comprise a horizontal beam extending along the longitudinal direction of the lower frame and at least two vertical beams extending in a direction perpendicular to the horizontal beam.

The first filter part may replace a vertical beam that is located closest to the discharge part among the at least two vertical beams.

The first filter part may be located between the discharge part and a vertical beam located closest to the discharge part among the at least two vertical beams.

The first filter part may be in contact with a position corresponding to the discharge part at the inside surface of the side surface frame.

The battery pack may comprise a flow path part located between the first filter part and the battery module located closest to the discharge part.

The flow path part may replace the vertical beam located closest to the discharge part.

The flow path part may comprise at least one partition wall part.

The flow path part comprises a first partition wall part and a second partition wall part, and the first partition wall part and the second partition wall part may each extend in the same direction from the inside surface of the side surface frame.

The first partition wall part and the second partition wall part may be spaced apart from each other on different inner surfaces of the side surface frame.

The materials generated from the battery module may move to a space where the first partition wall part and the inner surface of the side surface frame are spaced apart from each other and a space where the second partition wall part and the inner surface of the side surface frame are spaced apart from each other.

According to another embodiment of the present disclosure, there is provided a device comprising the above-mentioned battery pack.

### [Advantageous Effects]

According to the embodiments, the present disclosure relates to a battery pack including a first filter part and a second filter part, and a device including the same. Particles, which are materials inside the cells ejected when gas or flame is generated in some battery modules, may be filtered through the first filter part and the second filter part. Thereby, the battery pack of the present disclosure and the device including the same not only minimize the possibility of particles clogging the discharge device of the battery pack, but also can minimize discharge of particles to the outside of the battery pack and prevent generation of external flames, while preventing structural collapse caused by increasing the pressure within the battery pack.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a perspective view showing a battery pack according to an embodiment of the present disclosure.
FIG. 2 is a view showing the upper surface frame of the battery pack of FIG. 1 under the state in which the upper pack frame thereof is removed.
FIG. 3 is a diagram showing the first filter part of FIG. 2.
FIGS. 4 and 5 are the battery packs according to another embodiment of the present disclosure, each of which is a diagram showing the upper surface of a battery pack including a first filter part having a streamline structure under the state in which an upper pack frame thereof is removed, unlike FIG. 1.
FIG. 6 is a battery pack according to another embodiment of the present disclosure, and are a diagram showing the upper surface of the battery pack including the first filter part formed with a closing part under the state in which the upper pack frame thereof is removed, unlike FIG. 1.
FIG. 7 is a diagram showing the first filter part of FIG. 6.
FIGS. 8 and 9 are the battery packs according to another embodiment of the present disclosure, each of which is a diagram showing the upper surface of the battery pack in which the first filter part is in contact with one side surface of the pack frame under the state in which the upper pack frame thereof is removed, unlike FIG. 1.
FIG. 10 is a perspective view showing a battery module according to an embodiment mounted on the battery pack of FIG. 1.
FIG. 11 is an exploded perspective view of the battery module of FIG. 10.
FIG. 12 is a perspective view showing a battery module mounted on the battery pack of FIG. 1 according to another embodiment.
FIG. 13 is a view showing the upper surface of a battery pack according to a comparative example of the present disclosure under the state in which the upper pack frame is removed.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Now, a battery pack according to one embodiment of the present disclosure will be described.

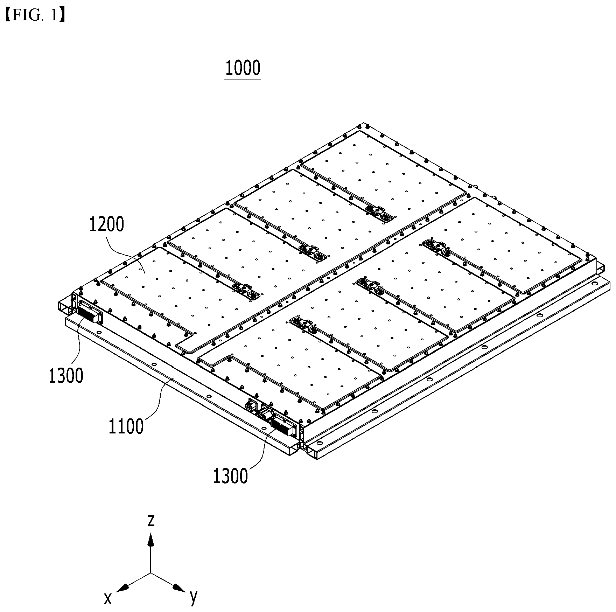

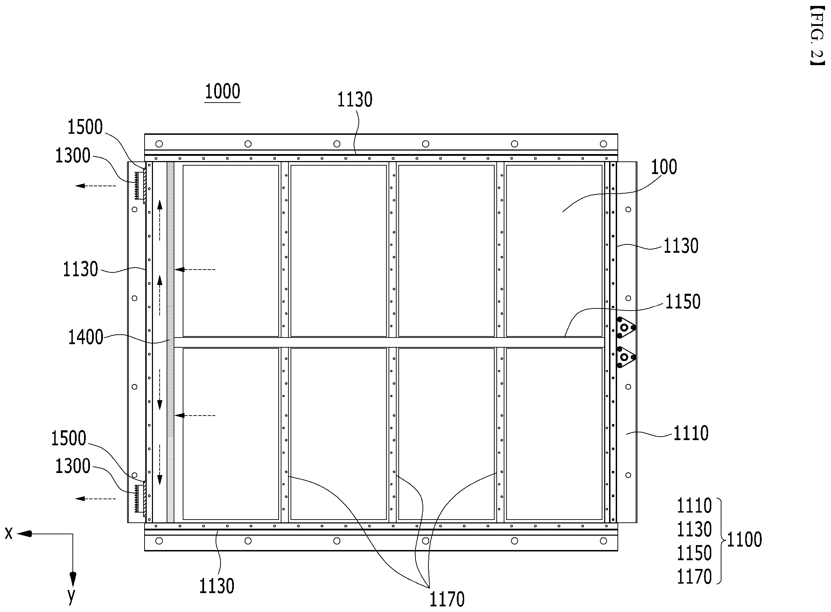

FIG. 1 is a perspective view showing a battery pack according to an embodiment of the present disclosure. FIG. 2 is a view showing the upper surface frame of the battery pack of FIG. 1 under the state in which the upper pack frame thereof is removed.

Referring to FIGS. 1 and 2, the battery pack 1000 according to an embodiment of the present disclosure comprises pack frames 1100 and 1200 on which a plurality of battery modules 100 are mounted; at least one discharge part 1300 located on one side surface of the pack frames 1100 and 1200; a first filter part 1400 located between the pack frames 1100 and 1200 and a battery module located closest to the discharge part 1300 among the plurality of battery modules 100; and a second filter part 1500 located at a position corresponding to the discharge part 1300 at one side surface of the pack frame 1100 and 1200.

The pack frames 1100 and 1200 comprise a lower pack frame 1100 on which a plurality of battery modules 100 are mounted and an upper pack frame 1200 located on an upper part of the battery module 100. Herein, the lower pack frame 1100 and the upper pack frame 1200 can be coupled to each other by a method such as welding to seal the inside of the battery pack 1000.

The lower pack frame 1100 may comprise a bottom part 1110 in contact with the lower surface of the battery module 100 and frame parts 1130, 1150 and 1170 in contact with at least one side surface of the battery module. Herein, the bottom part 1110 and the frame parts 1130, 1150 and 1170 may be integrated with each other, or may be fixed to each other through a separate fastening method such as welding or adhesion.

Herein, the frame parts 1130, 1150 and 1170 may be made of insulating members. In one example, the frame parts 1130, 1150 and 1170 may be composed of an aluminum extrusion structure. In another example, the frame pars 1130, 1150 and 1170 are made of a dissimilar metal bonding material such as clad metal, or may be a structure containing an insulating material such as aerogel or EPP (Expanded Polypropylene) foam. However, the present disclosure is not limited thereto, and the frame parts 1130, 1150 and 1170 can be used without limitation as long as they are made of a heat-insulating material having a prescribed rigidity.

The frame parts 1130, 1150 and 1170 may comprise a side surface frame 1130 extending from the edge of the bottom part 1110 toward the upper part and internal frames 1150 and 1170 located inside the side surface frame 1130.

Herein, the plurality of battery modules 100 may be partitioned from each other by the side surface frame 1130 and the internal frame 1150. More specifically, the plurality of battery modules 100 may be located apart from each other by the side surface frame 1130 and the internal frames 1150 and 1170.

Further, the internal frames 1150 and 1170 may include a horizontal beam 1150 extending along the longitudinal direction (x-axis direction) of the lower frame 1100, and at least two vertical beams 1170 extending in a direction perpendicular (y-axis direction) to the horizontal beam 1150. In one example, the vertical beam 1170 includes a pair of first vertical beams and second vertical beams with the horizontal beam 1150 being interposed between them, so that the first vertical beam and the second vertical beam can each be attached to the horizontal beam 1150. Herein, the horizontal beam 1150 and the at least two vertical beams 1170 may be integrated with each other, or may be fixed to each other through a separate fastening method such as welding or adhesion.

More specifically, the length of the horizontal beam 1150 and the vertical beam 1170, and the interval between vertical beams 1170 adjacent to each other among the at least two vertical beams 1170 may be adjusted in accordance with the size of the battery module 100.

With the above configuration, the battery pack 1000 according to the present embodiment can effectively prevent heat propagation phenomena between adjacent battery modules 100 even if a fire phenomenon occurs in some of the battery modules 100, because a plurality of battery modules 100 can be located apart from each other in areas partitioned by frame parts 1130, 1150 and 1170.

Referring to FIG. 2, the first filter part 1400 may replace the vertical beam located closest to the discharge part 1300 among at least two vertical beams 1170. That is, the battery pack 1000 according to the present embodiment can increase space efficiency within the battery pack 1000 in that there is no need to secure a separate space for mounting the first filter part 1400.

Thereby, the first filter part 1400 can filter materials generated in the battery module 100 and also partition the battery module 100 from the side surface frame 1300 located closest to the discharge part 1300.

Although not illustrated in FIG. 2, the internal frames 1150 and 1170 include at least one venting hole (not shown) passing through the outer surface of the internal frames 1150 and 1170, so that the internal frames 1150 and 1170 may be a moving route of the materials generated in the battery module 100. Further, the materials generated in the battery module 100 discharged from the internal frames 1150 and 1170 pass through the first filter part 1400, the second filter part 1500, and the discharge part 1300, and can be discharged to the outside of the battery pack 1000. However, the present disclosure is not limited thereto, and any route through which materials generated in the battery module 100 inside the battery pack 1000 can move toward the first filter part 1400, the second filter part 1500 and the discharge part 1300 can be applied to the present embodiment.

The discharge part 1300 may rupture when the pressure inside the battery pack 1000 reaches a prescribed level or higher. More specifically, the discharge part 1300 may include a rupture surface (not shown) configured to rupture when the pressure of the inflowing gas exceeds a prescribed pressure, such as a rupture disk. However, the structure of the discharge part 1300 is not limited thereto, and any configuration that communicates with one side surface of the pack frames 1100 and 1200 and allows internal gas to be discharged to the outside can be included in the present embodiment.

Thereby, in the battery pack 1000 according to the present embodiment, in the case of gas and/or flame discharged toward the discharge part 1300 among the materials generated in the battery module 100, when the pressure inside the pack frames 1100 and 1200 reaches a prescribed level or higher, the gas and/or flame can be discharged to the outside through the discharge part 1300.

Referring to FIG. 2, the first filter part 1400 may be located between the pack frames 1100 and 1200 and a battery module located closest to the discharge part 1300 among the plurality of battery modules 100. More specifically, the first filter part 1400 may extend along the longitudinal direction of one side surface of the pack frames 1100 and 1200 between the battery modules and the pack frames 1100 and 1200 located closest to each other. In one example, as shown in FIG. 2, the first filter part 1400 may extend along the longitudinal direction of the vertical beam 1170. However, the present disclosure is not limited thereto, and the extension direction of the first filter part 1400 may vary depending on the arrangement of the battery module 100 and the frame parts 1130, 1150 and 1170.

Thereby, in the battery pack 1000 according to the present embodiment, the first filter part 1400 may primarily filter materials generated in the battery module 100 that move from the battery module 100 toward one side surface of the pack frames 1100 and 1200.

Further, the second filter part 1500 may be located at a position corresponding to the discharge part 1300 at one side surface of the pack frames 1100 and 1200. In one example, as shown in FIG. 2, the second filter part 1500 may be located between the outer surface of one side of the pack frames 1100 and 1200 and the discharge part 1300. In another example, the second filter part 1500 may be located within one side surface of the pack frames 1100 and 1200 corresponding to the discharge part 1300. **In** another example, the second filter part 1500 may be located on the inner surface of one side of the pack frames 1100 and 1200 corresponding to the discharge part 1300.

Further, the second filter part 1500 may extend along an area corresponding to the discharge unit 1300 at one side surface of the pack frames 1100 and 1200. **In** one example, as shown in FIG. 2, the second filter part 1500 may extend along an area equal to or larger than that of the discharge part 1300.

Thereby, in the battery pack 1000 according to the present embodiment, the second filter part 1500 may secondarily filter materials generated in the battery module 100 that moves from the first filter part 1400 toward the discharge part 1300.

In one example, the area of the first filter part 1400 may be larger than the sum of the areas of at least one discharge part 1300. In another example, the area of the first filter part 1400 may be larger than the sum of the areas of the second filter part 1500.

Thereby, in the battery pack 1000 according to the present embodiment, even though the amount of the particles filtered by the first filter part 1400 among the materials generated in the battery module 100 is greater than the amount filtered by the second filter part 1500, the first filter part 1400 may not be clogged by the particles, and prevent the structural collapse caused by increasing the pressure inside the battery pack 1000.

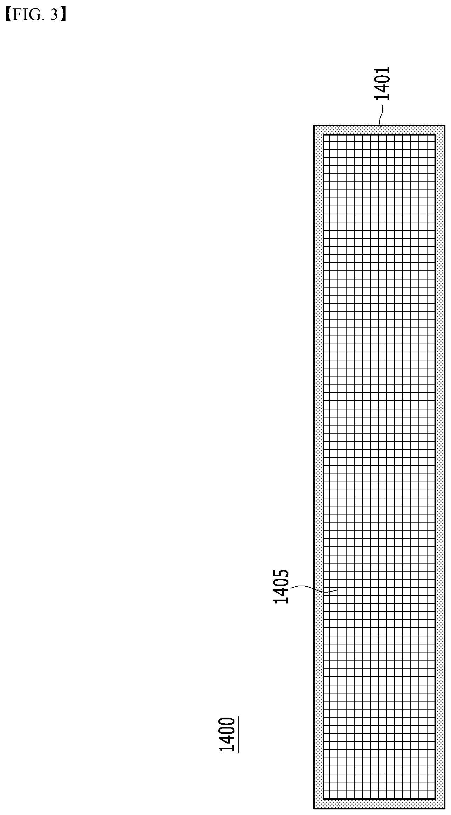

Referring to FIGS. 2 and 3, the materials generated in the battery module 100 may move through the first filter part 1400, the second filter part 1500, and the discharge part 1300. Herein, the materials generated in the battery module 100 may be at least one of flame, gas, heat, and particles, which are materials inside the cells generated when the battery module 100 ignites. In particular, among the materials generated in the battery module 100, particles, which are materials inside the cells, may be filtered through the first filter part 1400 and the second filter part 1500. In other words, among the materials generated in the battery module 100, at least some of the particles, which are materials inside the cells, may not pass through the first filter part 1400 and/or the second filter part 1500.

More specifically, the materials generated in the battery module 100 may be primarily filtered through the first filter part 1400. Herein, after the material generated in the battery module 100 passes through the first filter part 1400, the amount of the particles contained in the material generated in the battery module 100 may be relatively reduced. Further, the materials generated in the battery module 100 that have passed through the first filter part 1400 may be secondarily filtered through the second filter part 1500. Herein, after the materials generated in the battery module 100 that has passed through the first filter part 1400 pass through the second filter part 1500, the amount of the particles contained in the materials generated in the battery module 100 may be relatively further reduced. The battery pack 1000 according to the present embodiment may be configured such that the materials finally discharged to the outside of the battery pack 1000 through the discharge part 1300 do not contain particles, which are materials inside the cells, or even if the particles are contained, the content may be relatively small compared to other materials.

Thereby, in the battery pack 1000 according to the present embodiment, particles among material generated in the battery module 100 can be effectively filtered through the first filter part 1400 and the second filter part 1500, thereby preventing the particles from clogging the discharge part 1300 and also preventing structural collapse caused by increasing the pressure inside the battery pack 1000.

In addition, the battery pack 1000 according to the present embodiment can minimize the discharge of particles of the materials generated in the battery module 100 to the outside of the battery pack through the discharge part 1300, thereby effectively preventing generation of external flames.

Referring to FIG. 3, the first filter part 1400 may include a filter frame 1401 and a filter net 1405. In one example, the first filter part 1400 may be configured to minimize the area of the filter frame 1401 and maximize the area of the filter net 1405. Thereby, the first filter part 1400 can have an area that can maximize the filtering effect by the filter net 1405 while maintaining the rigidity of the first filter part 1400 through the filter frame 1401.

In one example, the filter frame 1401 may be made of the same material as the frame parts 1110, 1130, 1150 and 1170, or may be made of a material having similar heat-insulating properties and rigidity as the frame parts 1110, 1130, 1150 and 1170. However, the present disclosure is not limited thereto, and any material that has heat-insulating properties and rigidity can be applied to the present embodiment.

Further, the filter net 1405 may be formed with a mesh structure. In one example, the filter net 1405 may be made of one of a pattern such as a grid, a circle, or a diamond. However, the present disclosure is not limited thereto, and any pattern that can filter particles among materials generated in the battery module 100 can be applied to the present embodiment.

The second filter part 1500 includes the same or similar components as the first filter part 1400, and thus, most of them can be described similarly to the first filter part 1400. Herein, the second filter part 1500 may have the same or different area from the first filter part 1400. In one example, referring to FIGS. 2 and 3, the area of the first filter part 1400 may be larger than the area of the second filter part 1500. However, the present disclosure is not limited thereto, and any area that can filter particles generated in the battery module 100 can be applied to the present embodiment.

Further, the pattern of the filter net 1405 of the first filter part 1400 may be the same as or different from the pattern of the filter net (not shown) of the second filter part 1500. In one example, the pattern of the filter net 1405 of the first filter part 1400 may be formed to be relatively less dense than the pattern of the filter net (not shown) of the second filter part 1500. In other words, the pattern of the filter net (not shown) of the second filter part 1500 may be formed to be relatively denser than the pattern of the filter net 1405 of the first filter part 1400.

Thereby, the first filter part 1400 can primarily filter relatively large particles, and the second filter part 1500 can secondarily filter relatively small particles.

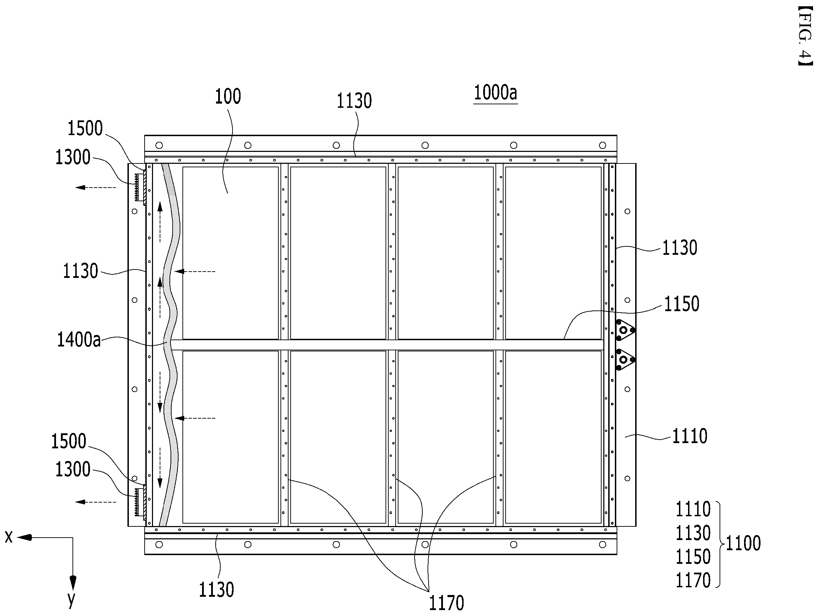

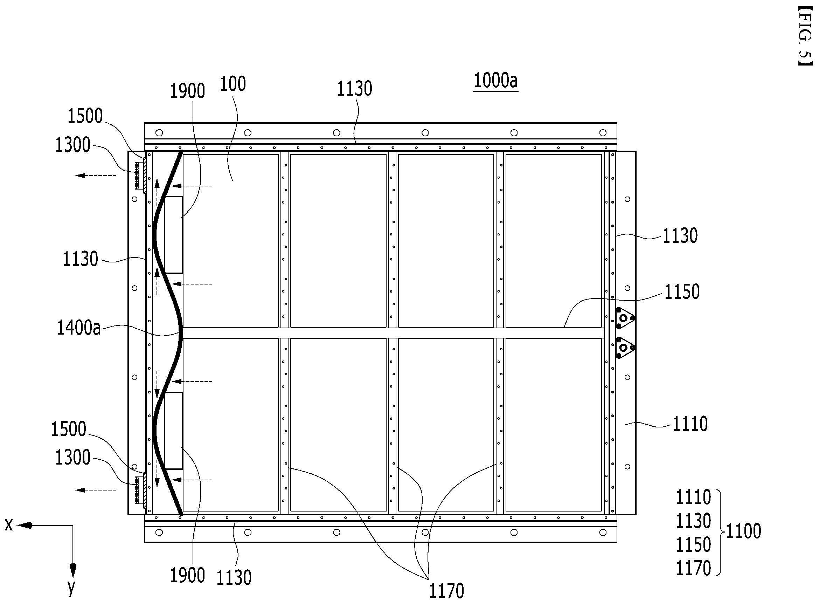

FIGS. 4 and 5 are the battery packs according to another embodiment of the present disclosure, each of which is a diagram showing the upper surface of a battery pack including a first filter part having a streamline structure under the state in which an upper pack frame thereof is removed, unlike FIG. 1.

Referring to FIGS. 4 and 5, in the battery pack 1000a according to the present embodiment, the first filter part 1400a may have a streamline or zigzag shape. That is, the area of the first filter part 1400a according to the present embodiment may be relatively larger than the first filter part 1400 (FIG. 2). However, the shape of the first filter part 1400a is not limited thereto, and any shape can be applied to the present embodiment as long as it can be mounted while avoiding interference with the internal structure or other components of the pack frames 1100 and 1200 of the battery pack 1000a.

Referring to FIG. 5, in the battery pack 1000a according to the present embodiment, at least one electrical part 1900 may be arranged in the internal space of the battery pack 1000. Herein, the electrical part 1900 may be equipped with a BMS (Battery Management System) module that monitors and controls the operation of other electrical components and the battery module 100. However, the arrangement of the electric part 1900 is not limited to FIG. 5, and may be arranged at an appropriate position in the internal space of the battery pack 1000a as necessary.

More specifically, in the battery pack 1000a of the present embodiment, at least one electrical part 1900 includes a battery module located closest to the discharge part 1300 among the plurality of battery modules 100 and the pack frames 1100 and 1200. At this time, the first filter part 1400a extends along one side surface of the pack frames 1100 and 1200, and may have a structure that avoids at least one electrical part. In one example, as shown in FIG. 5, the first filter part 1900a has a curved structure that wraps around the electrical part 1900, but unlike FIG. 5, the first filter part 1400a may be modified and applied into various shapes depending on the shape of the electric part 1900.

Thereby, in the battery pack 1000a according to the present embodiment, the amount of filtering according to the area of the first filter part 1400a is relatively increased, so that materials generated in the battery module 100 can be filtered more effectively. Further, the first filter part 1400a can be mounted while avoiding interference with the internal structure or other components of the pack frames 1100 and 1200, so that space efficiency can be increased by utilizing the empty space inside the battery pack 1000.

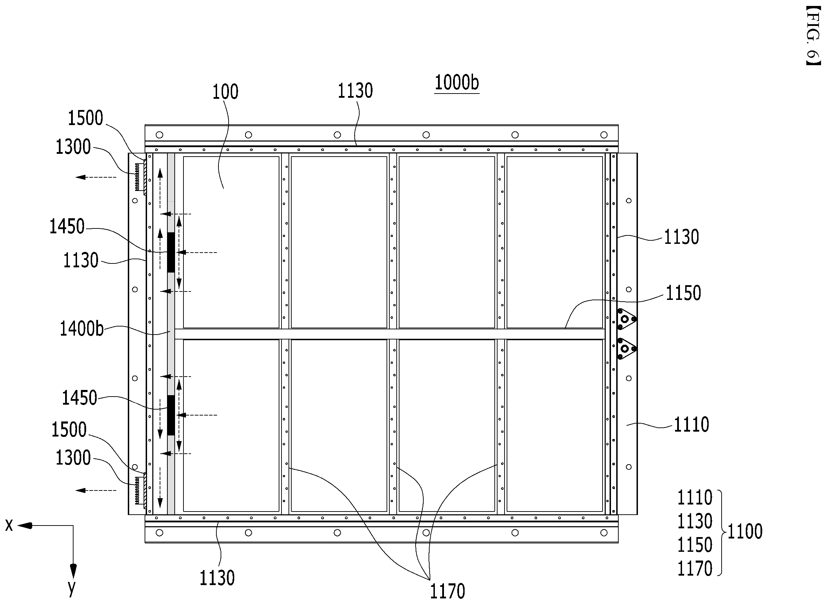

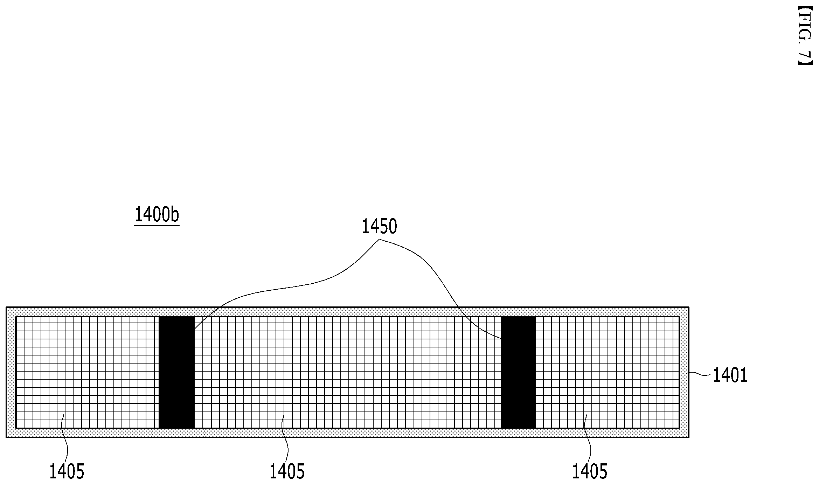

FIG. 6 is a battery pack according to another embodiment of the present disclosure, and are a diagram showing the upper surface of the battery pack including the first filter part formed with a closing part under the state in which the upper pack frame thereof is removed, unlike FIG. 1. FIG. 7 is a diagram showing the first filter part of FIG. 6.

Referring to FIGS. 6 and 7, in the battery pack 1000b according to the present embodiment, the first filter part 1400b includes at least one closing part 1450 together with a filter frame 1401 and a filter net 1405, and materials generated in the battery module 100 may move while avoiding the closing part 1450. More specifically, as shown in FIG. 6, at least one closing part 1450 in the first filter part 1400b may be spaced apart from each other. Further, the closing part 1450 may be located at a position corresponding to the side surface of the battery module 100, as shown in FIG. 6. However, the present disclosure is not limited thereto, and in the first filter part 1400b, any position can be applied to the present embodiment as long as it is a position for controlling the movement of materials generated in the battery module 100 in an intended direction. In one example, the closing part 1450 may be made of a material that does not allow materials generated in the battery module 100 to pass through.

Thereby, in the battery pack 1000b according to the present embodiment, the first filter part 1400b may prevent the movement of materials generated in the battery module 100 through the closing part 1450, thereby controlling the movement of materials generated in the battery module 100 in a desired direction. That is, the closing part 1450 relatively lengthens the moving route of materials generated in the battery module 100, so that the amount of the materials generated in the battery module 100 filtered by the first filter part 1400b can be relatively increased.

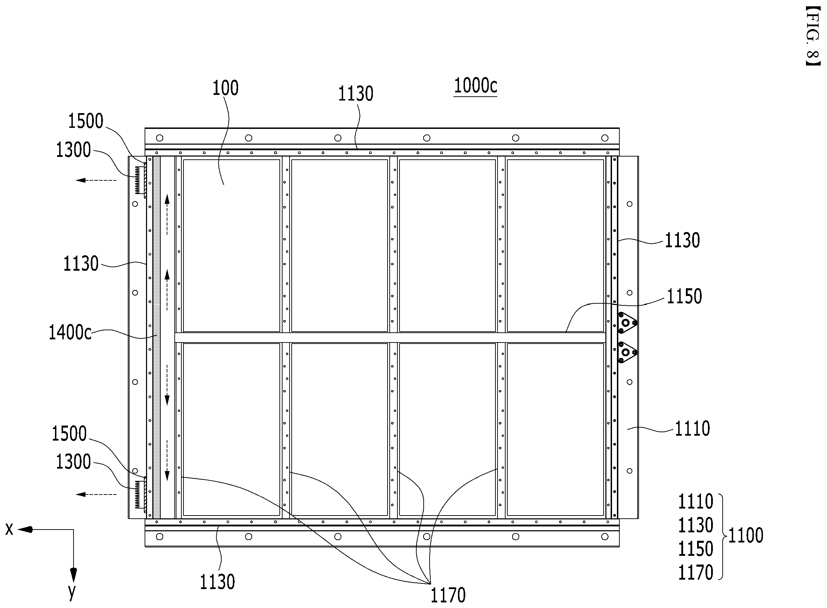

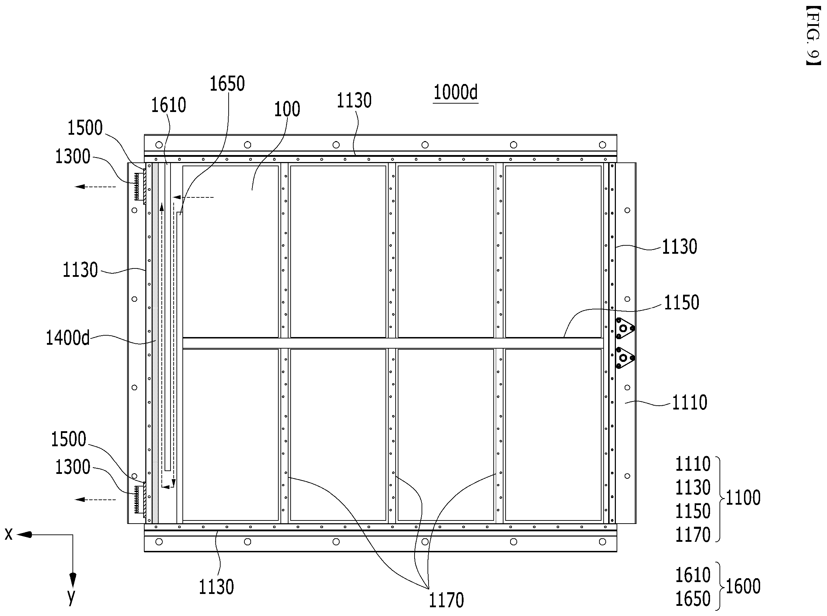

FIGS. 8 and 9 are the battery packs according to another embodiment of the present disclosure, each of which is a diagram showing the upper surface of the battery pack in which the first filter part is in contact with one side surface of the pack frame under the state in which the upper pack frame thereof is removed, unlike FIG. 1.

Referring to FIG. 8, in the battery pack 1000c according to the present embodiment, the first filter part 1400c may be located between the discharge part 1300 and the vertical beam 1170 located closest to the discharge part 1300 among the at least two vertical beams 1170. In one example, the first filter part 1400c may be in contact with a position corresponding to the discharge part at the inside surface of the side frame 1130.

Thereby, the battery pack 1000c according to the present embodiment is equipped with the first filter part 1400c using the empty space inside the battery pack 1000, thereby increasing the space efficiency within the battery pack 1000.

Referring to FIG. 9, in the battery pack 1000d according to the present embodiment, it may include a flow path part 1600 located between the first filter part 1400d and the battery module 100 located closest to the discharge part 1300.

More specifically, the flow path part 1600 may replace the vertical beam 1170 located closest to the discharge part 1300. Thereby, the flow path part 1600 serves as a moving route of materials generated in the battery module 100, and can also partition the battery module 100 from the side surface frame 1300 located closest to the discharge part 1300.

Further, the flow path part 1600 may include at least one partition wall part 1610 or 1650. In one example, the partition wall parts 1610 and 1650 may be made of the same material as the frame parts 1110, 1130, 1150 and 1170. Herein, as shown in FIG. 6, the flow path part 1600 may include a first partition wall part 1610 and a second partition wall part 1650. However, the present disclosure is not limited thereto, and the flow path part 1600 may be configured such that one of the first partition wall part 1610 and the second partition wall part 1650 is omitted, or a partition wall part is further added in addition to the first partition wall part 1610 and the second partition wall part 1650.

More specifically, the first partition part 1610 and the second partition part1650 each extend in the same direction from the inner surface of the side surface frame 1130, and the first partition wall part 1610 and the second partition wall part 1650 may be spaced apart from each other on different inner surfaces of the side frame 1130. That is, the materials generated in the battery module 100 may move to a space where the first partition wall part 1610 and the inner surface of the side surface frame 1130 are spaced apart from each other, and a space where the second partition wall part 1650 and the inner surface of the side surface frame 1130 are spaced apart from each other. However, the present disclosure is not limited thereto, and the first partition wall part 1610 and the second partition wall part 1650 have a structure in which at least part is open, so that materials generated in the battery module 100 can move through the open part.

Thereby, in the battery pack 1000d according to the present embodiment, the first partition part 1610 and the second partition part 1650 may form a flow path through which materials generated in the battery module 100 move in the flow path part1600. Thereby, in the battery pack 1000d according to the present embodiment, the material generated in the battery module 100 may be partially cooled as it passes through the flow path part 1600, thereby further improving the safety of the battery pack 1000 and also preventing heat propagation phenomena.

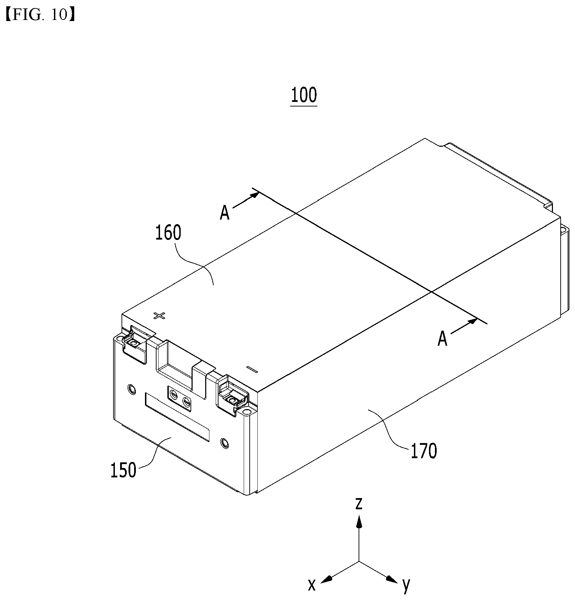

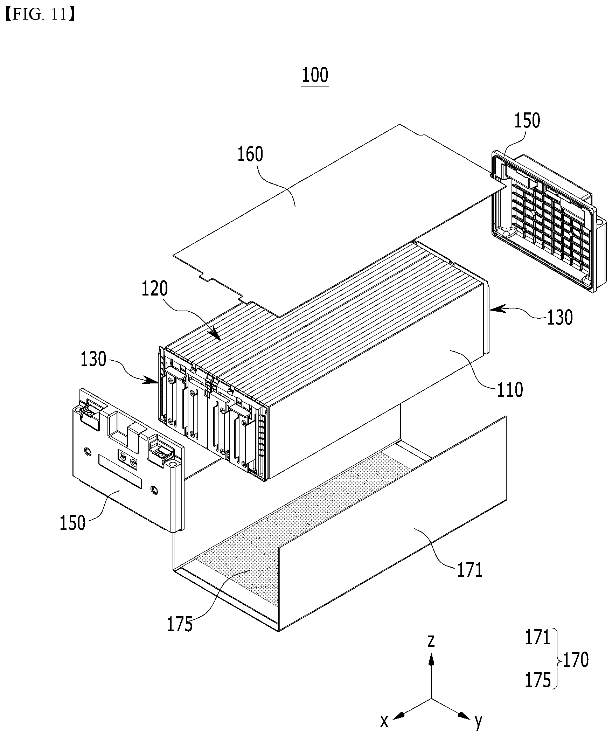

FIG. 10 is a perspective view showing a battery module according to an embodiment mounted on the battery pack of FIG. 1. FIG. 11 is an exploded perspective view of the battery module of FIG. 10.

Referring to FIGS. 2, 10 and 11, a plurality of battery modules 100 contained in the battery pack 1000 according to the present embodiment may be mounted on the lower pack frame 1100. More specifically, the plurality of battery modules 100 can be mounted to an area partitioned by the side surface frame 1130 and the internal frames 1150 and 1170 as shown in FIGS. 2, 4 to 6, 8, and 9. However, the arrangement direction of the battery module 100 is not limited thereto, and may be appropriately changed as necessary.

In one example, the battery module 100 includes a battery cell stack 110 in which a plurality of battery cells 110 are stacked, and module frames 160 and 170 that house the battery cell stack 120, as shown in FIGS. 10 and 11.

The battery cell 110 is preferably a pouch type battery cell. In one example, the battery cell 110 may be produced by housing the electrode assembly in a pouch case of a laminate sheet including a resin layer and an inner layer, and then heat-sealing a sealing part of the pouch case. The battery cell 110 may be formed in a rectangular sheet-like structure. The battery cells 110 may be configured by a plurality of numbers, and the plurality of battery cells 110 are stacked so as to be electrically connected to each other, thereby forming a battery cell stack 120. Herein, the number of battery cells 110 forming the battery cell stack 120 may be adjusted according to circumstances.

The module frames 160 and 170 may include an upper cover 160 and a U-shaped frame 170. Further, they include a thermally conductive resin layer 175 located between the battery cell stack 120 and the lower part of the module frames 160 and 170.

Herein, the U-shaped frame 170 may include a bottom part and two side surface parts extending upward from both ends of the bottom part. At this time, the bottom part may cover the lower surface of the battery cell stack 120, and the side surface part may cover the side surface of the battery cell stack 120. The upper cover 160 and the U-shaped frame 170 can be coupled by welding or the like in a state in which the corner portions corresponding to each other are in contact with each other, to thereby form a structure that covers the top, bottom, left and right of the battery cell stack 120. For this purpose, the upper cover 160 and the U-shaped frame 170 may be made of a metal material having a predetermined strength.

In another example, although not illustrated in FIGS. 10 and 11, the module frames 160 and 170 may be replaced with a metal plate-shaped mono frame in which the upper and lower surfaces and both side surfaces integrated. In another example, the module frames 160 and 170 may be replaced with a shape in which two L-shaped frames are coupled. In another example, the module frames 160 and 170 may be replaced with a frame of a 4-plate structure in which an upper surface plate, a lower surface plate, a left plate, and a right plate are coupled. However, the present disclosure is not limited thereto, and any frame can be applied to the present embodiment as long as it can protect the internal components of the battery module 100.

In addition, the battery module 100 further includes a busbar frame 130 located on the front and rear surfaces of the battery cell stack 120, respectively, and an end plate 150 that covers the busbar frame 130. Herein, a busbar (not shown) electrically connected to the battery cell stack 120 may be located in the busbar frame 130. Thereby, the end plate 150 can physically protect the battery cell stack 120 and other electrical components from external impact.

The battery module 100 according to another embodiment of the present disclosure may have a structure in which at least some of the components such as the module frames 160 and 170, the end plate 150, and the busbar frame 130 are omitted in the battery module 100 of FIGS. 10 and 11. In other words, the battery module 100 may have a structure in which the components in the battery module unit are minimized. **In** one example, the battery module 100 may have a structure in which the module frames 160 and 170 and/or the end plate 150 are omitted.

Thereby, the battery pack 1000 according to the present embodiment may have a structure in which at least some of the components of the battery module 100 are omitted, thereby reducing the weight of the battery pack 1000, and also further increasing the space utilization rate inside the battery pack 1000.

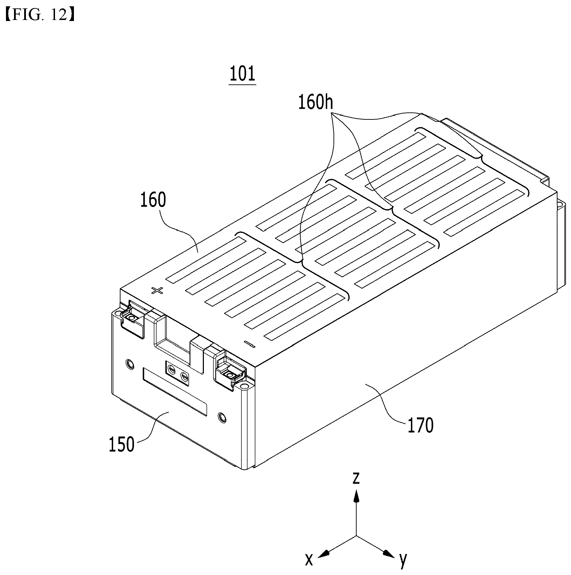

Referring to FIG. 12, the battery module 101 according to another embodiment of the present disclosure may be mounted inside the battery pack 1000. Herein, the battery module 101 can be described mostly in the same manner as the battery module 100 described above, and only the different parts will be described.

Referring to FIG. 12, in the battery module 101 according to the present embodiment, a plurality of venting holes 160h may be formed in the upper cover 160. Herein, the venting hole 160h may be a hole passing through the upper cover 160. More specifically, the plurality of venting holes 160h may extend along the longitudinal direction of the upper cover 160, and may be located to be spaced apart from each other along the length and width directions of the upper cover 160. However, the shape and arrangement of the plurality of venting holes 160h are not limited to FIG. 12, and various shapes and arrangements can be applied to the present embodiment.

Therefore, in the battery module 101 according to the present embodiment, when a cell event such as a thermal runaway phenomenon occurs within the battery module 101, gas and/or flame generated within the battery module 101 can be smoothly discharged to the outside of the battery module 101 through the venting hole 160h, and heat propagation inside and outside the battery module 101 may be relatively delayed compared to the battery module 100 of FIG. 10. Further, in the battery pack 1000 on which the battery module 101 is mounted, as heat propagation inside and outside the battery module 101 is delayed compared to the battery module 100 of FIG. 10, there is an advantage that heat propagation between other adjacent battery modules 101 can also be effectively delayed.

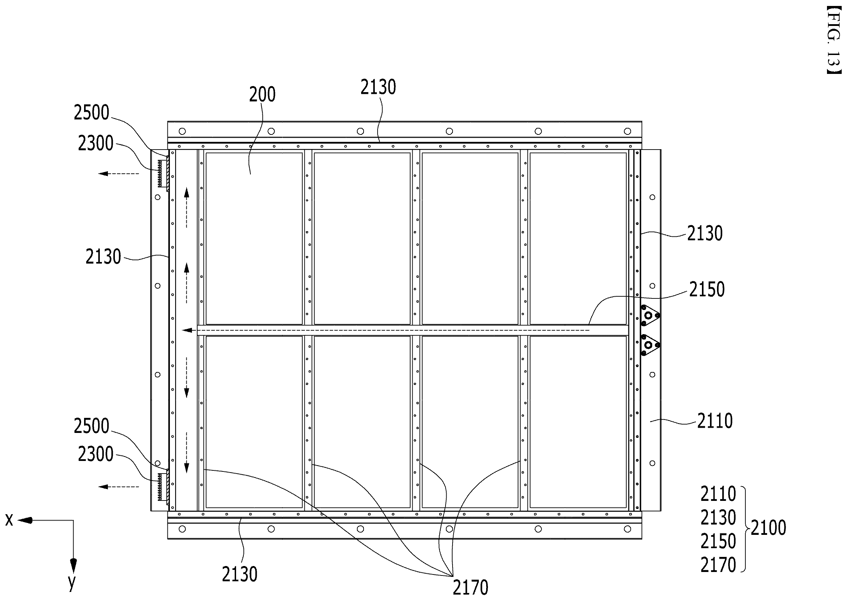

FIG. 13 is a view showing the upper surface of a battery pack according to a comparative example of the present disclosure under the state in which the upper pack frame is removed.

Referring to FIG. 13, unlike the battery packs 1000, 1000a, 1000b, 1000c, and 1000d (FIGS. 1-9) according to the present embodiment, the battery pack 2000 according to the comparative example has a structure that does not include the first filter parts 1400, 1400a, 1400b, 1400c and 1400d, but includes all the other components in the same manner.

Referring to FIG. 13, the battery pack 2000 according to the comparative example includes a filter part 2500 located at a position corresponding to the discharge part 2300, and thus, some of the materials generated in the battery module 200 may be filtered. However, in the battery pack 2000 according to the comparative example, the amount of the materials filtered by the filter part 2500 can be very limited as compared to the battery pack 1000, 1000a, 1000b, 1000c, and 1000d (FIGS. 1-9) according to the present embodiment, and there is a problem that the materials not filtered by the filter part 2500 may clog the discharge part 2300. Further, if unfiltered material clogs the discharge part 2300, the pressure inside the pack may increase and the structure of the battery pack 2000 may collapse depending on the rigidity of the pack frame 2100..

On the other hand, referring to FIGS. 1 to 9, the battery pack 1000 according to the present embodiment includes a first filter part 1400 and a second filter part 1500, and thus, can effectively filter materials generated in the battery module. That is, unlike the comparative example, the battery pack 1000 according to the present embodiment has the advantage that not only it can minimize the possibility of particles clogging the discharge device of the battery pack, but also it minimize the possibility of the particles discharging to the outside of the battery pack, while preventing structural collapse caused by increasing the pressure inside the battery pack, thereby preventing generation of external flames.

According to yet another embodiment of the present disclosure, there can be provided a device comprising the above-mentioned battery pack. Such a device can be applied to vehicle means such as an electric bike, an electric vehicle, and a hybrid electric vehicle, but the present disclosure is not limited thereto, and is applicable to various devices that can use a battery module and a battery pack including the same, which also falls under the scope of the present disclosure.

Hereinafter, the present invention will be described in more detail with reference to the following examples. However, these examples are for illustrative purposes only, and the scope of the present invention is not limited thereby.

### <Example>

A battery pack was manufactured in which battery modules as shown in FIG. 12 were arranged in an arrangement of 2*4 within the pack frame. The battery pack was manufactured such that as shown in FIGS. 1 and 2, two discharge parts were located on one side surface of the pack frame, a first filter part was located between the discharge part and the battery module located closest to the pack frame, and a second filter part was located at a position corresponding to the discharge part at one side surface of the pack frame.

### <Comparative Example>

As shown in FIG. 12, the battery pack of Comparative Example was manufactured in the same manner as in the battery pack of Example, except that the battery modules as shown in FIG. 9 were arranged in an arrangement of 2*4 within the pack frame, and the first filter part was omitted.

### <Experimental Example - Confirmation of maximum pressure inside the battery pack and time point of flame exposure>

In each Example and Comparative Example, among the eight battery modules, one battery module in the same position was designated as a trigger module, the trigger module is a module that intentionally causes thermal runaway (TR) phenomenon within the battery module, and an adjacent module refers to a module located adjacent to the trigger module.

In each Example and Comparative Example, the thermal runaway time, heat propagation time, and heat propagation speed of the trigger module and the adjacent module were measured, respectively, and the heat propagation time, maximum pressure, and flame exposure time point between modules of the battery pack were measured, respectively. The results are shown in Table 1 below.

**[Table 1]**

| | Trigger module | | Adjacent module | | Heat propagati on time between modules | Maximum pressure | Flame exposure time point |
|---|---|---|---|---|---|---|---|
| | Thermal runaway time | Heat propagation time, heat propagation speed | Therm al runaw ay time | Heat propagation time, heat propagation speed | | | |
| Exampl e | 105s | 426s, 4.9Ah/s | 3589s | 26s, 80.6 Ah/s | 3484s (=58min) | 0.025bar (trigger module TR time point), 1.20bar(adj acent module TR time point) | 3596s (=59.9min) |
| Compar ative Exampl e | 101s | 153s, 13.7Ah/s | 101s | 49s, 49.9Ah/s | 0 | 1.28bar | 106s |

Referring to Table 1, it can be confirmed that in the case of Example, the time at which thermal runaway of the trigger module occurs is 105s, and the time and speed of heat propagation across the battery cells within the trigger module are 426s and 4.9Ah/s. Unlike the same, it can be confirmed that in the case of Comparative Example, the time at which thermal runaway of the trigger module occurs is 101s, and the time and speed of heat propagation across the battery cells within the trigger module are 153s and 13.7 Ah/s.

That is, it can be confirmed that based on the trigger module, the response to heat propagation within the battery module of the battery module included in Example is delayed as compared to the battery module included in Comparative Example. Through this difference, it can be confirmed that, unlike Comparative Example, Example allows the gas and/or flame inside the battery module to be smoothly discharged to the outside through the venting hole formed in the upper cover of the battery module, and thus, Example allows the response to heat propagation within the battery module to be relatively delayed as compared to the Comparative Example.

Referring to Table 1, it can be confirmed that the time at which thermal runaway occurs in an adjacent module of Example is 3589s, and the time and speed of heat propagation across the battery cells within the adjacent module are 26 s and 80.6 Ah/s. Herein, it can be confirmed that in the case of Example, the heat propagation time from the trigger module to the adjacent module, that is, the heat propagation time between modules, is 3484s (3589s-105s). Unlike the same, it can be confirmed that the time at which thermal runaway occurs in an adjacent module of Comparative Example is 101s, and the time and speed of heat propagation across the battery cells within the adjacent module are 49 s and 49.9 Ah/s. Herein, it can be confirmed that in the case of Comparative Example, the heat propagation time from the trigger module to the adjacent module, that is, the heat propagation time between modules is 0s (101s-101s).

That is, on the basis of the trigger module, Example shows that the heat propagation time between modules is 3484s (=58min), and the response to heat propagation between battery modules is effectively delayed. Unlike the same, Comparative Example shows that the heat propagation time between modules is 0s, and the heat propagation reaction between battery modules occurs immediately. In particular, Example shows that as the gas and/or flame within the trigger module is smoothly discharged to the outside of the module, the response to heat propagation of the trigger module is also relatively delayed, and the heat propagation response to adjacent modules is also low. Unlike the same, Comparative Example shows that the gas and/or flame within the trigger module is not discharged to the outside of the module, so the heat propagation response of the trigger module progresses rapidly, and the heat propagation response to adjacent modules also occurs immediately.

Referring to Table 1, it can be confirmed that the maximum pressure inside the battery pack of Example is 0.025 bar at the time point of thermal runaway of the trigger module and 1.20 bar at the time point of thermal runaway of the adjacent module, and the flame exposure time is 3596s (=59.9min). Unlike the same, Comparative Example shows that the maximum pressure inside the battery pack is 1.28 bar, and the flame exposure time is 106s.

That is, unlike Comparative Example, as the battery pack of Example further includes a first filter part together with a second filter part, particles among materials generated in the battery module where thermal runaway has occurred are removed, and gas and/or flame inside the battery pack are smoothly discharged to the outside of the battery pack, so that the maximum pressure inside the battery pack is relatively low compared to Comparative Example. **In** addition, it can be confirmed that in the battery pack of Example, the maximum pressure inside the battery pack is maintained relatively low for a relatively long time, and thus the collapse of the pack structure is delayed in that the maximum pressure is maintained at 0.025 bar to 1.20 bar until heat propagation occurs from the trigger module to the adjacent module (at the point of thermal runaway of the adjacent module), and also it can be confirmed that the time point of flame exposure is also effectively delayed.

Unlike the same, it can be confirmed that the battery pack of Comparative Example does not include the first filter part, so that among the materials generated in the battery module where thermal runaway occurred, particles clog the discharge part, and thus gas and/or flame are not discharged smoothly. That is, it can be confirmed that only through the second filter part formed at a position corresponding to the discharge part as in the battery pack of Comparative Example, particles inside the battery pack is sufficiently not removed. In addition, in the battery pack of Comparative Example, the maximum pressure inside the battery pack becomes relatively high at 1.28 bar in a relatively short period of time, so that there is a high possibility that collapse of the pack structure will occur, and the flame exposure time is also very short.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
120: battery cell stack
130: busbar frame
150: end plate
160: upper plate
170: module frame
1000: battery pack
1100: lower pack frame
1200: upper pack frame
1300: discharge part
1400: first filter part
1401: filter frame
1405: filter net
1450: closing part
1500: second filter part
1600: partition wall part

## Claims

1. A battery pack comprising:
pack frames on which a plurality of battery modules are mounted;
at least one discharge part located on one side surface of the pack frames;
a first filter part located between the pack frames and a battery module located closest to the discharge part among the plurality of battery modules; and
a second filter part located at a position corresponding to the discharge part at one side surface of the pack frames,
wherein materials generated in the battery module move through the first filter part, the second filter part, and the discharge part.

2. The battery pack of claim 1, wherein:
the area of the first filter part is larger than the sum of the areas of the at least one discharge part.

3. The battery pack of claim 1, wherein:
the area of the first filter part is larger than the sum of the areas of the second filter part.

4. The battery pack of claim 1, further comprising:
at least one electrical part located between the pack frame and a battery module located closest to the discharge part among the plurality of battery modules,
wherein the first filter part extends along one side surface of the pack frame and has a structure that avoids the at least one electrical part.

5. The battery pack of claim 4, wherein:
the first filter part has a streamline or zigzag pattern.

6. The battery pack of claim 1, wherein:
the first filter part comprises at least one closing part spaced apart from each other, and
the materials generated in the battery module move while avoiding the closing part.

7. The battery pack of claim 1, wherein:
the pack frames comprise a lower pack frame on which a plurality of battery modules are mounted and an upper pack frame located on an upper part of the battery module,
wherein the lower pack frame comprises a bottom part in contact with the lower surface of the battery module and a frame part in contact with at least one side surface of the battery module.

8. The battery pack of claim 7, wherein:
the frame part comprises a side surface frame extending from the edge of the bottom part toward the upper part and an internal frame located inside the side surface frame.

9. The battery pack of claim 8, wherein:
the plurality of battery modules are partitioned from each other by the side surface frame and the internal frame.

10. The battery pack of claim 8, wherein:
the internal frame comprises a horizontal beam extending along the longitudinal direction of the lower frame and at least two vertical beams extending in a direction perpendicular to the horizontal beam.

11. The battery pack of claim 10, wherein:
the first filter part replaces a vertical beam that is located closest to the discharge part among the at least two vertical beams.

12. The battery pack of claim 10, wherein:
the first filter part is located between the discharge part and a vertical beam located closest to the discharge part among the at least two vertical beams.

13. The battery pack of claim 12, wherein:
the first filter part is in contact with a position corresponding to the discharge part at the inside surface of the side surface frame.

14. The battery pack of claim 12, wherein:
the battery pack comprises a flow path part located between the first filter part and the battery module located closest to the discharge part.

15. The battery pack of claim 14, wherein:
the flow path part replaces the vertical beam located closest to the discharge part.

16. The battery pack of claim 15, wherein:
the flow path part comprises at least one partition wall part.

17. The battery pack of claim 15, wherein:
the flow path part comprises a first partition wall part and a second partition wall part, and
the first partition wall part and the second partition wall part each extend in the same direction from the inside surface of the side surface frame.

18. The battery pack of claim 17, wherein:
the first partition wall part and the second partition wall part are spaced apart from each other on different inner surfaces of the side surface frame.

19. The battery pack of claim 18, wherein:
the materials generated from the battery module move to a space where the first partition wall part and the inner surface of the side surface frame are spaced apart from each other and a space where the second partition wall part and the inner surface of the side surface frame are spaced apart from each other.

20. A device comprising the battery pack of claim 1.
